Europäisches Patentamt

(19) European Patent Office

Office européen des brevets

(11) Publication number : **0 083 837 B2**

# (12) NEW EUROPEAN PATENT SPECIFICATION

(45) Date of publication of the new patent specification : **09.12.92 Bulletin 92/50**

(21) Application number : **82306175.9**

(22) Date of filing : **19.11.82**

(51) Int. Cl.⁵ : **C08L 67/06,** C08L 75/04, C08L 63/10, C08F 283/00, C08J 5/08

(54) Thickened moulding compositions.

The file contains technical information submitted after the application was filed and not included in this specification

(30) Priority : **03.12.81 GB 8136546**

(43) Date of publication of application :
**20.07.83 Bulletin 83/29**

(45) Publication of the grant of the patent :
**12.10.88 Bulletin 88/41**

(45) Mention of the opposition decision :
**09.12.92 Bulletin 92/50**

(84) Designated Contracting States :
**BE CH DE FR IT LI NL SE**

(56) References cited :
**EP-A- 0 052 958**

(56) References cited :
DE-A- 2 402 739
DE-A- 2 447 852
DE-A- 2 725 133
FR-A- 917 213
GB-A- 644 287
GB-A- 1 007 168
GB-A- 1 472 794

(73) Proprietor : **SCOTT BADER COMPANY LIMITED**
**Wollaston**
**Wellingborough Northamptonshire NN9 7RL (GB)**

(72) Inventor : **Thompson, Stephen John**
**56 The Banks**
**Wellingborough Northamptonshire (GB)**

(74) Representative : **Harrison, David Christopher et al**
**MEWBURN ELLIS 2 Cursitor Street**
**London EC4A 1BQ (GB)**

EP 0 083 837 B2

## Description

This invention relates to thickened reinforced unsaturated resin compositions suitable for moulding.

Moulding compositions based on unsaturated polyester resins normally consist of resin, filler, catalyst for curing, internal mould release agents and reinforcing fibres. The original compositions were in the form of a putty-known as "dough moulding compounds" (DMC). Following the discovery that the incorporation of certain Group II oxides and hydroxides such as $CaO$, $Ca(OH)_2$, $MgO$, $Mg(OH)_2$ caused thickening of the resin system, compositions known as "bulk moulding compounds" (BMC) which were tack free and "sheet moulding compounds" (SMC) became available. BMC was originally based on choped glass fibres whilst SMC was based on chopped strand mat and, after compacting, was rolled up between sheets of polyethylene. After about 3 days the polyethylene could be readily peeled off to yield a tack free sheet which could be loaded into a heated press and moulded at temperatures of 120-150°C under pressure.

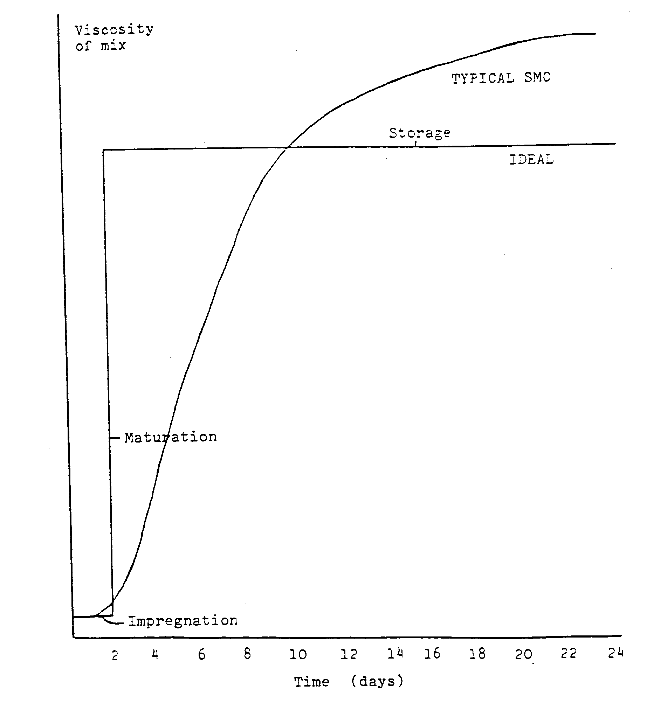

The thickening of resin by Group II metal oxides/hydroxides is due to a combination of the formation of covalent bonds and co-ordination bonds. It is difficult to control. Ideally the impregnation mix should be low in viscosity to allow good impregnation of the fibres, should thicken rapidly after impregnation and should reach a maximum viscosity which does not change on storage. Such behaviour is represented by a graph of viscosity vs. time (days) marked "IDEAL" in the accompanying drawing. What actually happens when using such metal oxides/hydroxides is also shown in another graph of the accompanying drawing marked "TYPICAL SMS". The rate and extent of thickening depends on the resin used to such an extent that not only the normal resin parameters have to be controlled (i.e. acid value and viscosity) but also hydroxyl value and molecular weight distribution. In addition, since the metal oxide/hydroxide is influenced by the presence of moisture and carbon dioxide in the atmosphere, special storage precautions are required to prevent even further variations in maturation on storage.

It is also known to make other types of thermosetting resins, e.g. vinyl esters, into BMCs and SMCs, but it has previously been necessary to make special modifications to the resins to allow the thickening reaction with Group II oxides and hydroxides to occur, this being because the standard vinyl ester resins often have very low acid values.

All of the abovementioned compositions were highly filled, but if unfilled systems were required the filer was omitted and a solvent based resin was pre-impregnated on to reinforcing fibres, the solvent removed and the resulting tacky prepreg rolled up between sheets of film. However, the sheets of film were difficult to remove from these prepregs due to the tackiness of the pre-impregnated fibre.

One method of overcoming the disadvantages with unfilled pre-impregnated reinforcements is described in B. P. 1,319.243 and B. P. 1,318,517. Examples are given in these patents of polyester resins which when blended with styrene monomer are solid and can be used to impregnate reinforcing fibres when molten.

We now find surprisingly that specific crystalline polyester resins can be used to thicken both filled and unfilled unsaturated polymer moulding compositions based on standard resins thus eliminating the need for special resins made for moulding compositions. Because the thickening mechanism is a physical one a number of other advantages occur:

(i) no metal oxide/hydroxide is required and hence, in contrast to when a metal oxide/hydroxide is used, no special storage precautions are required to prevent further variations in maturing,
(ii) indeed, no maturation period is required the compositions being ready for moulding as soon as they have cooled,
(iii) storage stability is much improved.

In DE-A-2725133 there are suggested two compositions which are thickened for preventing intermingling of different coloured components of an artificial marble mix. In one, amorphous polyesters are thickened by the use of conventional inorganic metal oxides or hydroxides. In an alternative, a crystalline unsaturated polyester is used as the sole polymer component of the composition. The crystalline polyester is not used as a thickener for the amorphous polyesters.

In GB-A-1007168 compositions contain a crystalline polyester the glycol component of which is ethylene glycol, and necessarily contain a filler.

Moulding compositions comprising an amorphous polyester and predominantly a crystalline polyester are disclosed in GB-A-1472794. The latter, however, is not used as a thickener.

A sheet moulding composition in accordance with the invention comprises fibrous reinforcement material impregnated with an unsaturated polymer, a vinyl monomer and, as thickener, a crystalline polyester, the glycol component of which is neopentyl glycol, 1,6-hexanediol or 1,4-cyclohexanedimethanol, the amount of crystalline polyester being from 30 to 50% by weight of the total weight of unsaturated polymer and crystalline polyester.

The crystalline polyester is preferably present in the composition in an amount of from 10-50%, more preferably 15-40%, by weight of the total weight of unsaturated polymer, vinyl monomer and crystalline polyester.

The polyesters used as thickeners in compositions of the invention are capable of crystallising by virtue of their having a symmetrical structure. They are preferably unsaturated since then, they may also take part in the cross-linking reaction with the vinyl monomer during curing. They may be made by the reaction of any of the symmetrical glycols neopentyl glycol, 1,6-hexanediol and 1,4-cyclohexanedimethanol with an acid which may be fumaric acid alone or which may additionally contain a minor percentage of a symmetrical aromatic saturated di-acid, e.g. terephthalic acid. For ease of handling they may be dissolved in a vinyl monomer, preferably a vinyl aromatic monomer, e.g. styrene, and incorporated in the composition in this form.

The unsaturated polymers to which the thickeners are added may be unsaturated polyesters such as those made by reacting one or more glycols with an unsaturated dicarboxylic acid or its anhydride or with a mixture of the unsaturated dicarboxylic acid or anhydride with a saturated dicarboxylic acid or its anhydride. The unsaturated polyesters may be dissolved in a vinyl type monomer and incorporated in the composition in this form. Optionally, minor amounts of alcohols, polyols, monobasic or polybasic acids may be incorporated in the reaction mixtures from which the unsaturated polyesters are made, which reaction mixtures may also include dicyclopentadiene to modify the polyesters.

Other unsaturated polymers which can be made into resin compositions in accordance with the invention using these techniques are vinyl ester polymers (which may be prepared by reaction of acrylic or methacrylic acid with epoxy resins) and urethane acrylate polymers, especially acrylate terminated polyurethanes.

The resin composition may additionally contain a filler, which can be selected from, for example, natural or precipitated calcium carbonates, clays, silica, talc, mica and alumina hydrate.

The composition is reinforced either by admixing a reinforcement, preferably reinforcing fibres, with the other components of the composition or by impregnating it into a fabric made from reinforcement fibres, so providing a prepreg. Whilst the reinforcing fibres will normally be glass fibres they may be substituted wholly or in part by carbon fibres, KEVLAR (RTM) or similar aramid fibres, natural fibres e.g. jute, or synthetic fibres.

Pigments may be incorporated in the composition if required.

The compositions may be cured using free radical catalysts such as organic peroxy compounds e.g. t-butyl perbenzoate or perketals but unfilled compositions may be cured using light.

Typical mould release agents which may additionally be incorporated in these compositions are zinc stearate and ZELEC (RTM) UN.

Any of the thermoplastics normally incorporated into SMC to reduce shrinkage may be incorporated in the composition e.g. polyethylene, acrylic co-polymers, polystyrene, saturated polyesters and polycaprolactones.

Preferred compositions embodying the invention will now be described in more detail with reference to the following Examples (Examples 1, 3 and 6 are outside the invention and are given for comparison).

Example 1 (Comparative)

A composition was prepared by mixing together under high shear:-

| | |
|---|---|
| Polyester resin | 100 parts by weight |
| (2:1 maleate:phthalate ester of propylene | |
| glycol, 65% solution in styrene) | |
| Calcium carbonate | 140 parts by weight |
| Zinc stearate | 5 parts by weight |
| Tertiary butyl perbenzoate | 1 part by weight |
| Magnesium oxide | 2.5 parts by weight |

This was made up into a sheet moulding compound with 2.54 cm (1″) chopped glass rovings (83 parts by weight), by rolling between two polyethylene carrier films. Maturation for 3 days at 20°C was required before the polyethylene films could be stripped off leaving a stiff, non tacky compound mouldable in matched steel moulds under pressure at 150°C.

Example 2

A composition was prepared by mixing together under high shear at 60°C:-

| | |
|---|---|
| Polyester resin as in Example 1 | 60 parts by weight |
| Crystalline resin | 40 parts by weight |
| (Neopentyl glycol fumarate, | |
| 70% solution in styrene) | |
| Calcium carbonate | 140 parts by weight |
| Zinc stearate | 5 parts by weight |
| Tertiary butyl perbenzoate | 1 part by weight |

This mixture was impregnated into 2.54 cm (1″) chopped glass roving (83 parts by weight) by the method of Example 1. The resulting sheet moulding compound was immediately chilled to 20°C, when it was found that the polyethylene carrier films could be cleanly stripped off, and the compound was immediately ready for moulding as in Example 1.

Example 3 (Comparative)

A mixture was prepared by high shear mixing of:-

| | |
|---|---|
| Polyester resin | 100 parts by weight |
| (Propylene glycol fumarate, modified | |
| with dicyclopentadiene, | |
| 70% solution in styrene) | |
| 3,3,5-trimethyl-1,1-bisperoxybutyl | |
| cyclohexane | 1 part by weight |
| Magnesium oxide | 4 parts by weight |

This mixture was impregnated by hand, between two polyethene carrier films, into:-
Woven glass fibre cloth        300 parts
and consolidated by rolling.

Rapid thickening of the resin caused difficulty in impregnation, and even after several days maturation at 20°C the resulting compound remained sticky and unpleasant to handle.

Example 4

A mixture was prepared by combining together under high shear at 60°C:-

| | |
|---|---|
| Polyester resin (as Example 3) | 50 parts by weight |
| Crystalline resin | 50 parts by weight |
| (1,6-hexanediol fumarate, | |
| 70% solution in styrene) | |
| 3,3,5-trimethyl-1,1-bisperoxybutyl | |
| cyclohexane | 1 part by weight |

The mixture was then impregnated at 60°C by the method of Example 3 into
Woven glass fibre cloth        300 parts.

The resulting compound was cooled to 20°C, when the polythene carrier films could be immediately stripped off, and the slightly tacky material was then moulded as in Example 1 into a high strength heat-resistant laminate.

Example 5

A mixture was prepared by combining together under high shear at 60°C:-

4

| Vinyl ester polymer resin | 75 parts by weight |
| (Reaction product of acrylic acid with an epoxy resin, 55% solution in styrene) | |
| Crystalline resin (as Example 4) | 25 parts by weight |
| t-Butyl perbenzoate | 1 part by weight |
| Alumina hydrate (filler) | 160 parts by weight |
| Zinc stearate (mould release agent) | 5 parts by weight |

The mixture (75 parts by weight) was then used to impregnate at 50°C 25 parts of 25 mm length chopped glass fibre between polyethylene carrier films to produce a sheet moulding compound which was rapidly cooled to 20°C. A firm, non-tacky material was obtained from which the polyethylene carrier film could be easily stripped before moulding. The material was moulded at 150°C and 6.9 MPa (1000 p.s.i.) pressure for 3 minutes to produce moulded articles of excellent quality.

Example 6 (Comparative)

Using the same technique as in Example 5 without the warming and cooling the following impregnation mix was used:-

| Vinyl ester resin (as Example 5) | 100 parts by weight |
| t-Butyl perbenzoate | 1 part by weight |
| Alumina hydrate | 130 parts by weight |
| Zinc stearate | 5 parts by weight |
| Magnesium oxide (thickening agent) | 3 parts by weight |

When impregnated into chopped glass fibres to give a glass content of 25% the material remained wet sticky and difficult to handle and mould even after several days maturation.

## Claims

1. A sheet moulding composition comprising fibrous reinforcement material impregnated with an unsaturated polymer, a vinyl monomer and a crystalline polyester consisting of an acid component and a glycol component, characterized in that the glycol component of the crystalline polyester is neopentyl glycol, 1,6-hexanediol or 1,4-cyclohexanedimethanol and the amount of crystalline polyester is from 30 to 50% by weight of the total weight of unsaturated polymer and crystalline polyester.

2. A Sheet moulding composition according to Claim 1, Wherein at least a part of the acid component of the crystalline polyester is fumaric acid.

3. A sheet moulding composition according to Claim 1 or 2, wherein at least a part of the acid component of the crystalline polyester is a symmetrical aromatic saturated dicarboxylic acid.

4. A sheet moulding composition according to any one of the preceding claims, wherein the amount of crystalline polyester present in the composition is from 10 to 50% by weight of the total weight of unsaturated polymer, vinyl monomer and crystalline polyester.

5. A sheet moulding composition according to any one of the preceding claims, wherein the unsaturated polymer is a polyester, a vinyl ester polymer or a urethane acrylate.

6. A sheet moulding composition according to any one of the preceding claims which additionally contains a filler.

7. A reinforced plastics article formed by moulding a sheet moulding composition characterized in that the sheet moulding composition is a composition according to any one of the preceding claims.

8. A method of making a sheet moulding composition for providing a moulded reinforced thermoset plastics material, which method comprises admixing an unsaturated polymer dissolved in a vinyl monomer with a thickener and applying the resultant mixture to fibrous reinforcement, characterized in that the thickener is a crystalline polyester wherein the glycol component is neopentyl glycol, 1,6-hexanediol or 1,4-cyclohexanedimethanol and the amount of crystalline polyester is from 30 to 50% by weight of the total weight of unsaturated polymer and crystalline polyester.

**Patentansprüche**

1. Platten- bzw. Folienform-Masse, enthaltend ein faserförmiges Verstärkungsmaterial, das mit einem ungesättigten Polymeren, einem Vinylmonomeren und einem kristallinen Polyester, bestehen aus einer Säurekomponente und einer Glycolkomponente, imprägniert ist, dadurch gekennzeichnet, daß es sich bei der Glycolkomponente des kristallinen Polyesters um Neopentylglycol, 1,6-Hexandiol oder 1,4-Cyclohexandimethanol handelt, und daß die Menge des kristallinen Polyesters 30 bis 50 Gew.-%, bezogen auf das Gesamtgewicht von ungesättigtem Polymeren und kristallinem Polyester, beträgt.

2. Platten- bzw. Folien-Formmasse nach Anspruch 1, worin mindestens ein Teil der Säurekomponente des kristallinen Polyesters Fumarsäure ist.

3. Platten- bzw. Folien-Formmasse nach Anspruch 1 oder 2, worin mindestens ein Teil der Säurekomponente des kristallinen Polyesters eine symmetrische, aromatische, gesättigte Dicarbonsäure ist.

4. Platten- bzw. Folien-Formmasse nach einem der vorhergehenden Ansprüche, worin die Menge des in der Masse enthaltenen kristallinen Polyesters 10 bis 50 Gew.-%, bezogen auf das Gesamtgewicht von ungesättigtem Polymeren, Vinylmonomeren und kristallinem Polyester, beträgt.

5. Platten- bzw. Folien-Formmasse nach einem der vorhergehenden Ansprüche, worin das ungesättigte Polymere ein Polyester, ein Vinylesterpolymeres oder ein Urethanacrylat ist.

6. Platten- bzw. Folien-Formmasse nach einem der vorhergehenden Ansprüche, die zusätlich einen Füllstoff enthält.

7. Verstärkter Kunsstoff-Formkörper, hergestellt durch Formen einer Platten- bzw. Folien-Formmasse, dadurch gekennzeichnet, daß es sich bei der Platten- bzw. Folien-Formmasse und eine Masse nach einem der vorhergehenden Ansprüche handelt.

8. Verfahren zur Herstellung einer Platten- bzw. Folien-Formasse für die Herstellung eines geformten, verstärkten, wärmegehärteten Kunsstoffmaterials, das umfaßt das Mischen eines ungesättigten Polymeren, gelöst in einem Vinylmonomeren mit einem Verdickungsmittel und Auftragen der resultierenden Mischung auf eine faserförmige Verstärkung, dadurch gekennzeichnet, daß es sich bei dem Verdickungsmittel um einen kristallinen Polyester handelt, in dem die Glycolkomponente Neopentylglycol, 1,6-Hexandiol oder 1,4-Cyclohexandimethanol ist, und daß die Menge des kristallinen Polyesters 30 bis 50 Gew.-%, bezogen auf das Gesamtgewicht von ungesättigtem Polymeren und kristallinem Polyester, beträgt.

**Revendications**

1. Composition pour le moulage en feuille comprenant un matériau de renforcement fibreux imprégné avec un polymère insaturé, un monomère vinylique et un polyester cristallin consistant en un constituant acide et un constituant glycolique, caractérisée en ce que le constituant glycolique du polyester cristallin est le néopentyl glycol, le 1,6-hexanediol ou le 1,4-cyclohexanediméthanol et en ce que la quantité de polyester cristallin est de 30 à 50% en poids du poids total de polymère insaturé et de polyester cristallin.

2. Composition pour le moulage en feuille selon la revendication 1. dans laquelle au moins une partie du constituant acide du polyester cristallin est l'acide fumarique.

3. Composition pour le moulage en feuille selon la revendication 1 ou la revendication 2, dans laquelle au moins une partie du constituant acide du polyester cristallin est un acide dicarboxylique saturé aromatique symétrique.

4. Composition pour le moulage en feuille selon l'une des revendications précédentes, dans laquelle la quantité de polyester cristallin présent dans la composition est de 10 à 50% en poids du poids total de polymère insaturé, de monomère vinylique et de polyester cristallin.

5. Composition pour le moulage en feuille selon l'une des revendications précédentes, dans laquelle le polymère insaturé est un polyester, un polymère d'ester vinylique ou un acrylate d'uréthane.

6. Composition pour le moulage en feuille selon l'une des revendications précédentes, qui contient en outre une charge.

7. Article en matière plastique renforcée formé par moulage d'une composition pour le moulage en feuille caractérisé en ce que la composition pour le moulage en feuille est une composition selon l'une des revendications précédentes.

8. Procédé de préparation d'une composition pour le moulage en feuille pour fournir un matériau en matière plastique thermodurcissable renforcé moulé , ce procédé comprenant le mélange d'un polymère insaturé dissous dans un monomère vinylique avec un épaississant et l'application du mélange résultant à un renforçateur fibreux, caractérisé en ce que l'apaississant est un polyester cristallin dans lequel le constituant glycolique est le néopentyl glycol, le 1,6-hexanediol ou le 1,4-cyclohexanediméthanol et en ce que la quantité de polyester cristallin est de 30 à 50% en poids du poids total de polymère insaturé et de polyester cristallin.